# EUROPEAN PATENT APPLICATION

(11) **EP 1 741 624 A1**
(43) Date of publication of application: **10.01.2007**
(21) Application number: 05106149.7
(22) Date of filing: 06.07.2005
(51) Int. Cl.: B63B 3/38, B63B 41/00, F16C 31/04

(54) **Device and system for canting a keel arrangement about a longitudinal axis of a sailing vessel**

(71) Applicant: Aktiebolaget SKF, 415 50 Göteborg (SE)
(72) Inventor: Claesson, Pontus, 254 50, Helsingborg (SE)
(74) Representative: Westman, Per Börje Ingemar

(57) **Abstract**

A device (1) for canting a keel arrangement (9) about a longitudinal axis of a sailing vessel is disclosed. It comprises a screw and nut arrangement (3), comprising a threaded nut (5) receiving a threaded screw (7). The screw and nut arrangement (3) is fixable to the keel arrangement (9) and to a fixed element (11) of the sailing vessel essentially perpendicularly to the longitudinal axis. A relative rotation between the threaded screw (7) and the threaded nut (5) is responsive for canting the keel arrangement (9) in relation to the sailing vessel. A mechanical rolling means (13) is in contact with the threaded screw (7) and the threaded nut (5). Also disclosed is a system (51) for canting a keel arrangement (9) about a longitudinal axis of a sailing vessel, comprising two devices (1).

## Description

### FIELD OF INVENTION

According to a first aspect, the present invention relates to a device for canting a keel arrangement about a longitudinal axis of a sailing vessel.

According to a second aspect, the present invention relates to a system for canting a keel arrangement about a longitudinal axis of a sailing vessel, comprising two devices according to the first aspect.

### BACKGROUND OF INVENTION

The efficiency of movement of a vessel in e.g. water is affected by any deviation of the vessel from its normally designed balance in the water and the vessel and its mast heels over to either left or right due to wind pressure on the sail, the hull usually presents a greater drag with the result that there is a loss of speed. A way of alleviating this problem is to provide a keel that is designed to cant in relation to the hull.

In the art there have been several technical solutions for canting a keel of a sailing vessel, or a sailing ship. For instance in US 4,817,550, a stabilizing system for vehicles such as sailing craft, ice craft or racing cars presents a ballasted member laterally movable and positionable by non binding locking mechanism. Also, in WO 01/81165, a device for varying ship draught resulting in providing a pendular keel enhancing the moment of statical stability. The device comprises two half keels that may open like wings of a butterfly.

Using rods and mechanical screws was an early solution for canting a keel of a sailing vessel. In US 5,152,238, a sailing vessel is disclosed having a segmented winged keel made up of a pair of L-shaped keel members which are independently swingable toward and away from one another. When in their normal, side by side, closed positions, the keel members define an inverted-T. Each keel member is swingable through an arc of approximately 90 degrees to decrease the overall draft of the vessel, or alternately to thwart a tendency for the vessel to heel in a crosswind. The mechanism is connected to the keel members to permit selective independent swinging thereof from the cabin or cockpit of the vessel. The swinging is accomplished by machine screw mechanical actuator comprising a threaded nut and an elongated threaded rod. A drawback of this invention is the high friction in the screw-nut interface. This limits the speed of which one may want to cant the keel. In case one would attempt canting the keel using this invention, there is a risk that the threaded rod and/or the elongated threaded rod will glow as a consequence of the high friction. This increases the risk of functional failure, injuries, and stand still. In particular, there is a risk of the screw will be inoperable in a current state that may result in a vessel breakdown.

Due to the limitations of mechanical screws, hydraulics was increasingly used instead of mechanical screws in the industry of sailing vessels, i.e. the problem of the too high friction in mechanical screws was solved by avoiding solutions incorporating screw and nut arrangements. For instance in US 4,117,797, a sailing vessel having a mast upstanding from the hull and connected to be free to tilt on the hull about a longitudinal axis is disclosed. In US 2004/0194683, an invention relating to a fin keel for boats, having a fixed part attached to the hull of the boat is disclosed. In both these inventions the movement of the keel structures is operated using hydraulics. Hydraulics implies use of a hydraulic fuel as well as a pressurizing motor. Solutions including hydraulics often become heavy which is a drawback in a sailing vessel. Also, replacing a hydraulic system is difficult and time consuming, especially at sea.

### SUMMARY OF INVENTION

The problem dealt with with the present invention is how to provide a low friction, light and environmentally safe device for canting a keel arrangement.

According to the first aspect of the present invention, a device for canting a keel arrangement about a longitudinal axis of a sailing vessel is disclosed. It comprises a screw and nut arrangement that comprises a threaded nut receiving a threaded screw. The screw and nut arrangement is fixable to the keel arrangement and to a fixed element of the sailing vessel essentially perpendicularly to the longitudinal axis. A relative rotation between the threaded screw and the threaded nut is responsive for canting the keel arrangement in relation to the sailing vessel. The keel arrangement may be mounted using a hinge like function, allowing the keel to cant in relation to the rest of the boat. A mechanical rolling means is arranged for contacting the threaded screw and the threaded nut.

In view of prior art inventions comprising screw and nut arrangements, using the mechanical rolling means arranged for contacting the threaded screw and the threaded nut leads to less friction. This also results in lower energy consumption for canting the keel arrangement. Low energy consumption is important due to the limited energy resources of a sailing vessel. Also, the present invention is functionally safer since the risk of a too high friction and its consequences is eliminated. Also, an opportunity of canting the keel arrangement with a higher speed is offered by the mechanical rolling means due to the lower friction.

In view prior art inventions comprising hydraulics systems, using a mechanical rolling means instead of hydraulics system leads to a lighter solution, which is often wanted in a sailing vessel, due to the impact of the weight on the sailing vessel performance. Also, using the rolling means instead of a hydraulics system leads to an environmentally safer solution since does not require the use of hydraulic fluid, including hydraulic oil. Also, using a mechanical rolling means as suggested by the present invention leads to a device where the same force may be applied regardless of whether the screw and nut arrangement will expand or contract. This is not the case when using hydraulics systems due to the difference in pressurized area in a hydraulic cylinder. Also, the present invention offers a device that is easier to replace than a hydraulic cylinder system.

Another advantage is that present invention only consumes energy when the keel arrangement cants about the longitudinal axis. At steady state (i.e when sailing) the present invention does not consume energy. The device is designed to allow work in a push-pull way.

In an embodiment, the fixed element is the hull of the sailing vessel, or it is connected to the hull of the sailing vessel. For the person skilled in the art, there are alternatives that are equivalent. The important characteristic of the fixed element is that it should function as a support for one end of the screw and nut arrangement.

In an embodiment, the mechanical rolling means is between the threaded portions of the threaded screw and the threaded nut.

In an embodiment, the mechanical rolling means is constituted by balls. Using balls offers back driving capability, or even full back driving capability, and a negligible starting torque.

In an embodiment, the mechanical rolling means is constituted by threaded rollers, which roll between the threads of the screw and nut arrangement.

In an embodiment, the mechanical rolling means is constituted by a part of a planetary roller screw, offering a synchronization providing a high reliability. Also, this offers full back driving capability and a negligible starting torque.

Advantages achieved by using threaded rollers instead of balls include that rollers allow higher load ratings, very high rotational speeds, and ability to survive shock loads.

In an embodiment, a fail-safe brake, e.g. a spring engaged brake, is provided for locking the screw and nut arrangement. An advantage is that there is no power consumption when the brake is locked, which is not the case when using hydraulics.

In an embodiment, an overload protection, preferably a torque overload protection is mounted between the screw and brake that instantly disengages if the sailing vessel gets exposed for severe dynamic loads. An advantage is the protection of the structural integrity of the sailing vessel. The torque limiters re-engage as soon as the overload terminates.

In an embodiment, the device comprises the keel arrangement. The keel arrangement comprises a keel, and a hinging means allowing an angular movement of the keel in relation to the hull of the boat. The keel arrangement comprises a lever extending in a direction providing a lever for an end of the screw and nut arrangement. The screw and nut arrangement is fixed to the keel arrangement, preferably the lever, and to the fixed element.

According to the second aspect of the present invention, a system for canting a keel arrangement about a longitudinal axis of a sailing vessel is disclosed. The system comprises two devices, each one of which according to any one of the embodiments of the first aspect. Using two of the above mentioned screw and nut arrangements, which have back driving capability, leads to that they do not jam, i.e. work against each other in a way so that they do not lock.

In an embodiment, the two devices are oppositely fixable in relation to each other to one or more fixed elements and the keel arrangement. In an embodiment, the two devices are oppositely fixed in relation to each other to one or more fixed elements and the keel arrangement. The one or more fixed elements may be constituted by the hull of the sailing vessel, or equivalent alternatives as indicated above.

In an embodiment, the device is operated by hand, leading to the advantage that its manual operation will be less laborious due to the mechanical rolling means.

### BRIEF DESCRIPTION OF DRAWINGS

In Figure 1, an embodiment of a device for canting a keel arrangement is schematically given.
In Figures 2A and 2B embodiments of mechanical rolling means in the device for canting a keel arrangement are given.
In Figure 3, an embodiment of a device for canting a keel arrangement is given.
In Figures 4A and 4B, an embodiment of the device for canting a keel arrangement when mounted inside a sailing vessel is given.
In Figure 5, a system for canting a keel arrangement having a single motor is given.
In Figure 6, a system for canting a keel arrangement having two motors is given.
In Figures 7A and 7B, an embodiment of the system for canting a keel arrangement when mounted inside a sailing vessel is given.

### DESCRIPTION OF EMBODIMENTS

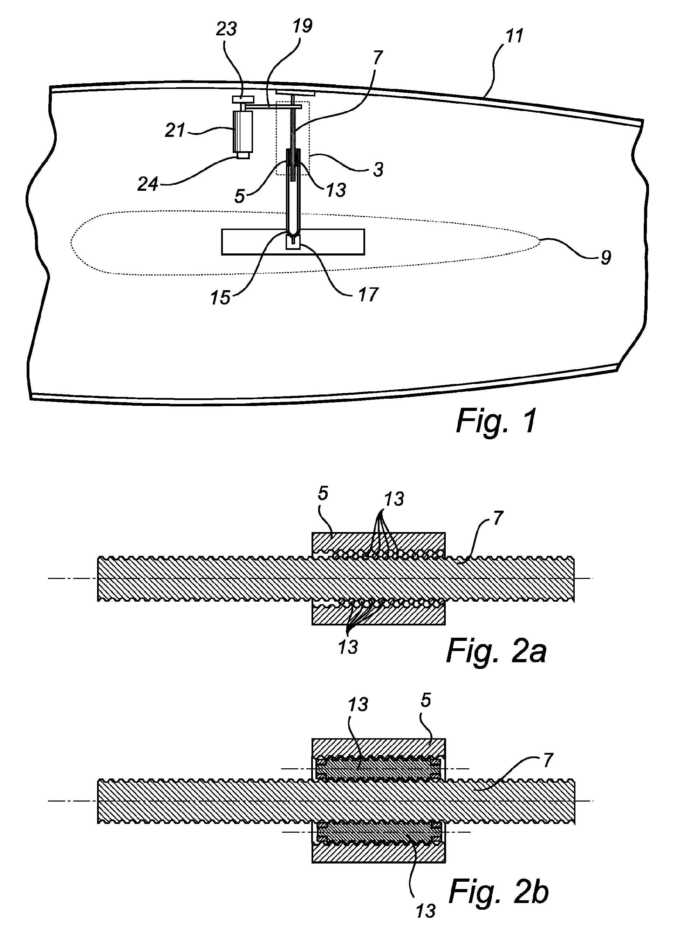

In Figure 1, an embodiment of a device 1 for canting a keel arrangement about a longitudinal axis in relation to a sailing vessel is given. The device 1 comprises a screw and nut arrangement 3 comprising a threaded nut 5 receiving a threaded screw 7. The screw and nut arrangement 3 is fixed to the keel arrangement 9 and to a fixed element 11, in this case the hull, of the sailing vessel essentially perpendicularly to the longitudinal axis. A relative rotation between the threaded screw 7 and the threaded nut 5 is responsive for canting the keel arrangement 9 in relation to the sailing vessel. A mechanical rolling means 13 is in contact with the threaded screw 7 and the threaded nut 5. More specifically, the mechanical rolling means 13 is between the threaded portions of the threaded screw 7 and the threaded nut 5.

The end of the screw and nut arrangement 3 is provided with a fork 15 to be mounted to a lever 17 extending in an opposite direction to the direction along which the keel extends. The other end of the screw and nut arrangement 3 is fixed to the hull 11 of the sailing vessel. A transmission 19 is responsible for transferring energy from a motor 21 to the screw and nut arrangement 3, leading to an angular shift of the lever 17 leading to a corresponding movement of the keel. The transmission 19 in Figure 1 is a chain transmission. A torque limiter 23 is mounted on a rotating shaft of the motor 21. Also, a spring-loaded brake 23 is mounted to the rotating shaft of the motor 21.

In figure 2A, the mechanical rolling means 13 is constituted by balls, which are between the threaded nut 5 and the threaded screw 7.

In Figure 2B, the mechanical rolling means 13 are constituted by threaded rollers, which are between the threaded nut 5 and the threaded screw 7.

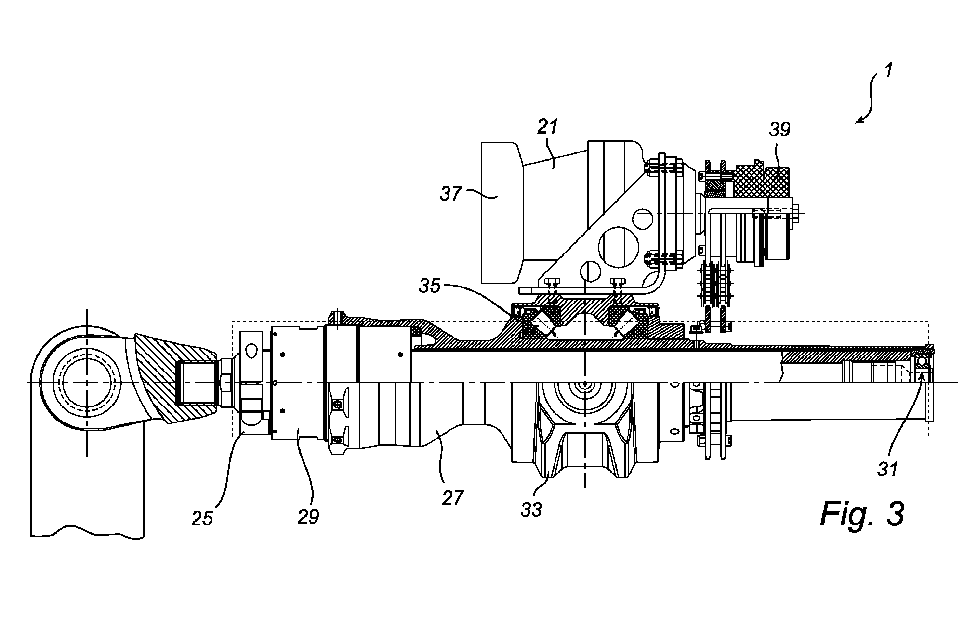

In Figure 3, an embodiment of the device 1 is shown. The lever 17 is mounted to the fork 15, which is mounted to the screw and nut arrangement 3. The screw and nut arrangement 3 comprises a dock stop 25, a sleeve 27, a rotating nut 29, screw shaft guiding 31, and a housing 33 comprising a self aligning thrust roller bearing 35. Mounted to the screw and nut arrangement 3 is the motor 21 to which a spring-loaded brake 37 and a torque limiter 39 are mounted.

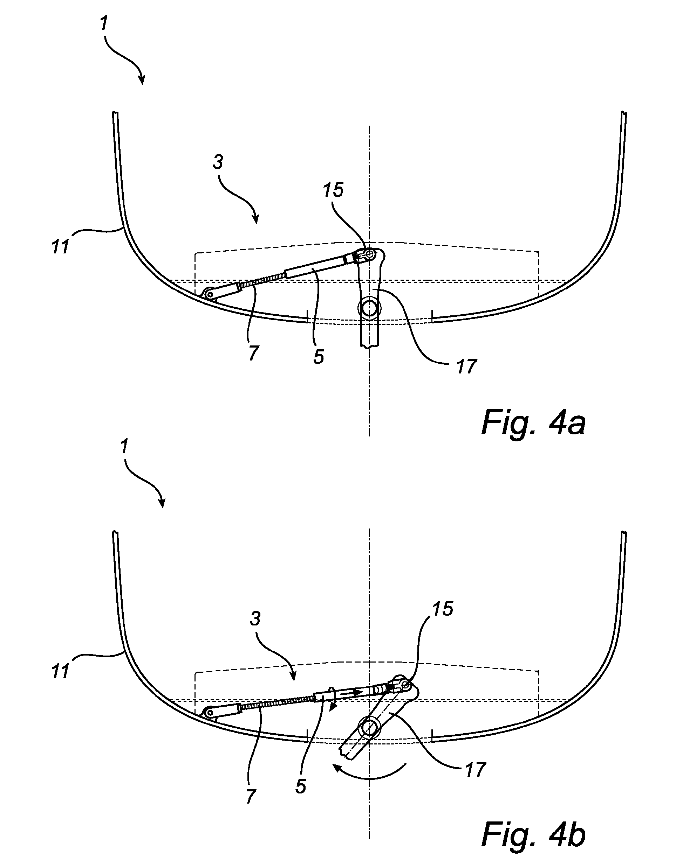

In Figure 4A, it is shown how the device 1 may be mounted to the hull 11 of the sailing vessel and the fork 15 of the lever 17. In Figure 4B, the device 1 is shown in a state where the keel is canted, which is caused by a relative rotation between the threaded screw 7 and the treaded nut 5 of the screw and nut arrangement 3.

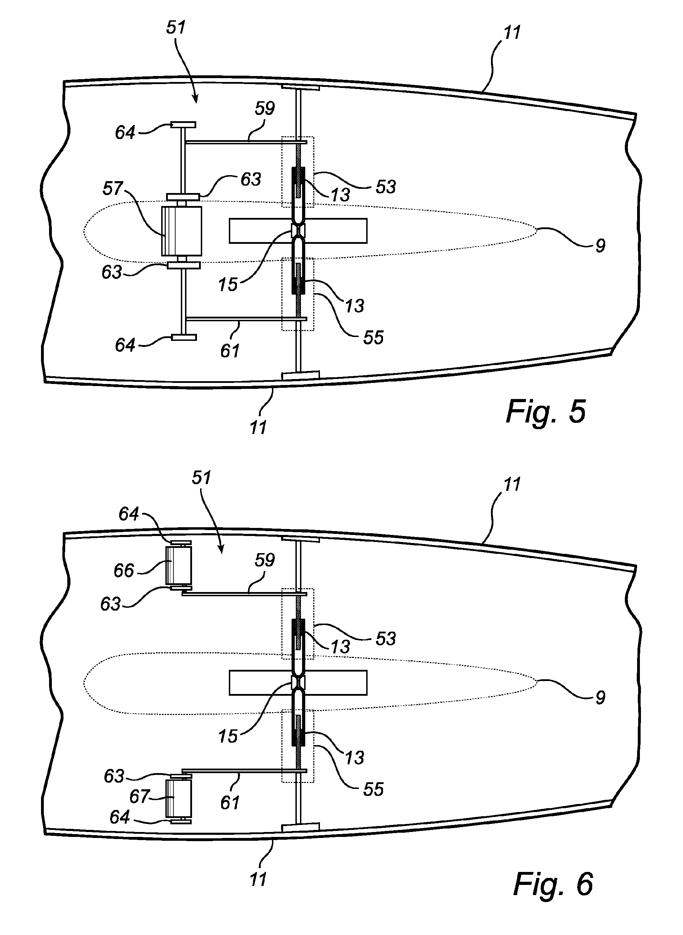

In Figure 5, a system 51 for canting a keel arrangement 9 about a longitudinal axis of a sailing vessel is disclosed. It comprises two screw and nut arrangements 53, 55 that are oppositely fixed in relation to each other to one or more fixed elements 11 and the keel arrangement 9. The fork 15 is designed for receiving two ends of two screw and nut arrangements 53, 55, comprising mechanical rolling means 13. The other ends of the screw and nut arrangements 53, 55 are fixed to the hull 11 of the sailing vessel. There is a single motor 57 driving the screw and nut arrangements 53, 55 via transmissions 59, 61. The driving of the motor 57 is equipped with torque limiters 63.

In Figure 6, a system 65 presenting similarities with the system 51 given in Figure 5 is given. A key difference is that there are two motors 63, 67. One motor 65 is responsible for driving one screw and nut arrangement 53 and the other motor 67 is responsible for driving the other screw and nut arrangement 55.

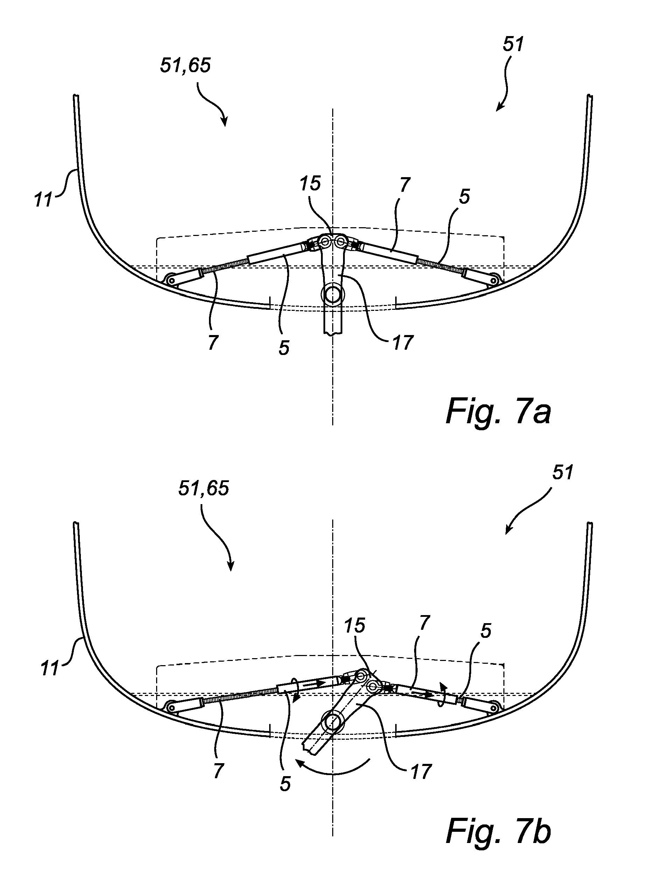

In Figures 7A, it is shown how the system 51, 65 may be mounted to the hull 11 of the sailing vessel and the fork 15 of lever 17. In Figure 7B, the system 51, 65 is shown in a state where the keel is canted, which is caused by a relative rotation between the threaded screws 7 and treaded nuts 5 of the screw and nut arrangements 53, 55.

## Claims

1. Device (1) for canting a keel arrangement (9) about a longitudinal axis of a sailing vessel, comprising:
- a screw and nut arrangement (3), comprising a threaded nut (5) receiving a threaded screw (7),
- the screw and nut arrangement (3) being fixable to the keel arrangement (9) and to a fixed element (11) of the sailing vessel essentially perpendicularly to the longitudinal axis, a relative rotation between the threaded screw (7) and the threaded nut (5) being responsive for canting the keel arrangement (9) in relation to the sailing vessel,
**characterized by**
- a mechanical rolling means (13) contacting the threaded screw (7) and the threaded nut (5).

2. Device (1) according to claim 1, wherein the fixed element (11) is a hull, or is connected to a hull (11).

3. Device (1) according to claim 1, wherein the mechanical rolling means (13) is between the threaded portions of the threaded screw (7) and the threaded nut (5).

4. Device (1) according to claim 3, wherein the mechanical rolling means (13) is constituted by balls.

5. Device (1) according to claim 3, wherein the mechanical rolling means (13) is constituted by threaded rollers.

6. A system (51) for canting a keel arrangement (9) about a longitudinal axis of a sailing vessel, comprising two devices (1), each one of which according to any one of claims 1 to 5.

7. System (51) according to claim 6, wherein the two devices (1) are oppositely fixable in relation to each other to one or more fixed elements (11) and the keel arrangement (9).
